# EUROPEAN PATENT SPECIFICATION

(11) **EP 1 897 912 B1**
(45) Date of publication and mention of the grant of the patent: **02.01.2013**
(21) Application number: 07115493.4
(22) Date of filing: 03.09.2007
(51) Int. Cl.: C08L 23/22, C08K 5/14, C08L 23/00

(54) **Peroxide cured thermoplastic vulcanizates comprising butyl rubber**
Peroxidgehärtete thermoplastische Vulkanisate mit Butylkautschuk
Vulcanisats thermoplastiques durcis au peroxyde comprenant du caoutchouc butyle

(30) Priority: 08.09.2006 US 843161 P
(43) Date of publication of application: 12.03.2008
(73) Proprietor: Lanxess Inc., Sarnia, Ontario N7T 7M2 (CA)
(72) Inventor: RESENDES, Rui, Corunna Ontario N0N 1G0 (CA); BEILBY, Jon, Wyoming Ontario N0N 1T0 (CA); PUGSLEY, Judy, Camlachie Ontario N0N 1E0 (CA); KRISTA, Rayner, Strathroy Ontario N7G 3X1 (CA); FERRARI, Lorenzo, Brights Grove Ontario N0N 1C0 (CA)
(74) Representative: Deblon, Jörg-Stephan

(56) References cited:
- EP-A- 0 376 227
- EP-A- 1 362 882
- WO-A-2006/058416
- WO-A-2006/125300

## Description

### Field of the Invention

The invention relates to peroxide cured thermoplastic vulcanizates comprising a thermoplastic and an isomonoolefin-multiolefin elastomer, such as butyl rubber. More particularly, the invention relates to peroxide cured thermoplastic vulcanizates wherein the elastomer comprises at least 3.5 mol% of multiolefin in order to facilitate peroxide curing. The thermoplastic vulcanizates according to the present invention are useful in the preparation of shaped articles for high purity applications, such as condenser caps, medical components and fuel cell components.

### Background

The development of a novel elastic fibers by Du Pont (US 2,623,031) and thermoplastic polyurethanes by B.F. Goodrich (US 2,871,218) ushered in a new class of materials known as thermoplastic elastomers (TPE's). Below their respective softening temperatures, these materials possess physical characteristics typically observed for compounds which are based on thermoset elastomers with the processability attributes of traditional thermoplastics. Following these seminal discoveries, Gessler et. al. (US 3037954) described the preparation of a new category of TPE's known as thermoplastic vulcanizates (TPV's). TPV's are marked by the presence of a dispersed, thermoset, elastomeric phase contained within a thermoplastic continuous phase. This class of TPE is prepared through a dynamic vulcanization process in which the elastomeric phase is being dispersed, under constant shear, throughout a thermoplastic matrix while being vulcanized. This process ensures a uniform distribution of the thermoset within the plastic matrix in addition to minimizing thermoset domain size and domain size distribution. The pioneering work by Gessler et. al. laid the foundation for future TPV developments ultimately leading to the introduction of the most commercially significant class of TPV commercialized by Monsanto under the trade name Santoprene® (US 4,130,535 and US 4,311,628). Santoprene® is based on a dynamically vulcanized EPDM phase dispersed within a continuous matrix of polypropylene (PP).

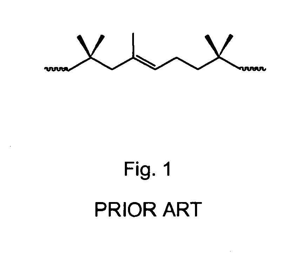

The random copolymer of isobutylene (IB) and isoprene (IP) is a synthetic elastomer commonly referred to as butyl rubber (IIR). Since the 1940's, IIR has been prepared in a slurry process in which isobutylene is randomly copolymerized with small amounts of isoprene (1 -2 mol %). The backbone structure of IIR (Figure 1), which is mostly comprised of polyisobutylene segments, imparts superior air impermeability, oxidative stability and excellent fatigue resistance to this material (see Chu, C. Y. and Vukov, R., Macromolecules, 18, 1423-1430, 1985).

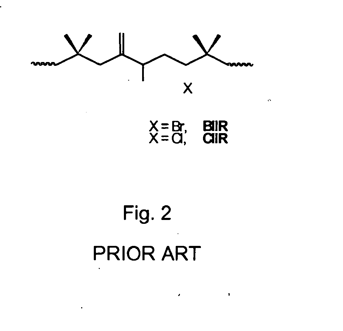

The first major application of IIR was in tire inner tubes. Despite the low levels of backbone unsaturation (ca. 0.8 - 1.8 mol %), IIR possesses sufficient vulcanization activity for inner tube application. With the evolution of the tire inner liner, it became necessary to enhance the cure reactivity of IIR to levels typically found for conventional diene-based elastomers such as butadiene rubber (BR) or styrene-butadiene rubber (SBR). To this end, halogenated grades of butyl rubber were developed. The treatment of organic IIR solutions with elemental chlorine or bromine results in the isolation of halobutyl rubber (HIIR), such as chlorobutyl (CIIR) and bromobutyl (BIIR) rubber (Figure 2). These materials are marked by the presence of reactive allylic halides along the polymer main chain.

In preparing a TPV based on commercially available grades of butyl rubber, one has several cure packages which are compatible with IIR and/or HIIR. Regular butyl rubber can be vulcanized with a traditional sulfur-accelerator cure system or one based on phenolic resins. With halogenated grades of butyl rubber, comes increased cure versatility. In addition to traditional sulfur or phenolic resin based cure systems, halobutyl rubber can be cured with polyfunctional nitrogen or sulfur based nucleophiles, bismaleimides or Lewis acids such as ZnO. In fact, the first example of a TPV as provided by Gessler et. al. was comprised of a ZnO cured chlorobutyl elastomeric phase dispersed within a continuous matrix of polypropylene. In selecting the type of butyl on which to base a TPV, halobutyl possesses a number of disadvantages. Irrespective of the cure system employed, it is well known to those skilled in the art that cured articles based on halobutyl rubber contain small amounts of organic halides arising from vulcanization induced thermal degradation. While the levels of organic halides are quite small, there presence can preclude the use of halobutyl based TPV's in a variety of pharmaceutical and consumer goods applications.

While IIR lacks any organic halide or organic halide precursors, the cure versatility of this material is much more limited than that of halobutyl rubber. For reasons similar to those described above, the use of sulfur-accelerator cure systems may be viewed as problematic for pharmaceutical and consumer goods end uses. In this case, undesirable organic or inorganic sulfides are created as bi-products of the vulcanization process. The use of a sulfur based cure system has the added disadvantage of yielding oligo-sulfide crosslinks of limited thermal stability. A low sulfur cure system possesses C-S bonds which have a dissociation energy of 285 kJ/mol. A traditional sulfur cure system possesses oligo-sulfido crosslinks with S-S covalent bond energies ranging from 155 - 270 kJ/mol (Sartomer Cure Concepts Volume 1). Given the high processing temperatures needed to melt and/or soften the thermoplastic component of a given TPV, the use of sulfur-based cure systems is problematic.

The use of a phenolic resin based cure system with IIR gives rise to cured articles which possess excellent heat resistance, flex to fatigue resistance and low levels of compression set. For IIR-based TPV's, the phenolic resin cure systems is superior to traditional sulfur cure packages (stronger C-C crosslinks versus thermally labile C-S and S-S crosslinks). In fact, a TPV based on resin cured IIR is available form AES under the trade name Trefsin®. Trefsin® is used in applications where high levels of both gas and moisture impermeability are required.

While the use of resin cure systems avoid the stability limitations normally encountered with sulfur-based curatives, other limitations do exist. Specifically, resin cured TPV's are more hygroscopic and can discolor. In order to minimize the appearance of defects, excess absorbed moisture must be removed through a lengthy, high temperature, drying process prior to article fabrication. The tendency of these materials to discolor necessitates higher loadings of pigments or the use of additional types of pigments (K. Naskar, J. W. M. Noordermeer, Novel Peroxides as Crosslinking Agents in Dynamically Vulcanized Thermoplastic Elastomers, Paper given at 2006 IRC, Lyon, France).

Peroxide cure systems offer several advantages over the cure systems discussed above. Peroxide cured compounds typically display extremely fast cure rates and the resulting cured articles tend to possess excellent heat resistance and low compression set. In addition, peroxide-curable formulations are considered to be "clean" in that they do not contain any extractable inorganic impurities and are non-discoloring. The clean rubber articles can therefore be used, for example, in condenser caps, biomedical devices, pharmaceutical devices (stoppers in medicine-containing vials, plungers in syringes) and possibly in seals for fuel cells. Where high levels of gas and moisture impermeability are required, a peroxide cured butyl TPV would be desirable. Specifically, by avoiding the use of halobutyl rubber or regular butyl rubber with sulfur-based curatives one also removes the possibility of having the finished article contaminated with extractable organic and/or inorganic halides or sulfides. When compared to a butyl-based TPV which has been resin cured, a peroxide cured butyl TPV would not possess elevated levels of hygroscopicity nor the tendency to discolor. These enhancements would be of particular benefit for pharmaceutical and consumer goods applications.

It is well accepted that polyisobutylene and butyl rubber decompose under the action of organic peroxides. Furthermore, US 3,862,265 and US 4,749,505 teach that copolymers of a C₄ to C₇ isomonoolefin with up to 10 wt. % isoprene or up to 20 wt. % para-alkylstyrene undergo a molecular weight decrease when subjected to high shear mixing. This effect is enhanced in the presence of free radical initiators such as peroxides, and is undesirable in TPV applications. Recently, the preparation of butyl-based, peroxide-curable compounds which employ the use of novel grades of high isoprene (IP) butyl rubber which can be produced in a continuous process was described in co-pending Canadian patent application 2,418,884. Specifically, CA 2,418,884 describes the continuous preparation of IIR with isoprene levels ranging from 3 to 8 mol %. The ability to peroxide cure these novel grades of IIR has been described in Canadian patent application CA 2,458,741.

### Summary of the Invention

Described herein is the preparation of a novel class of butyl-based TPVs in which the dispersed elastomeric phase is, for example, dynamically vulcanized, peroxide cured, high isoprene butyl rubber.

According to the present invention, there is provided a peroxide cured thermoplastic vulcanizate comprising: a thermoplastic; and, a non-halogenated elastomer comprising repeating units derived from at least one C₄ to C₇ isomonoolefin monomer and at least 3.5 mol% of repeating units derived from at least one C₄ to C₇ multiolefin monomer.

According to another aspect of the invention, there is provided a thermoplastic vulcanizate prepared by: providing a thermoplastic; providing a non-halogenated elastomer comprising repeating units derived from at least one C₄ to C₇ isomonoolefin monomer and at least 3.5 mol% of repeating units derived from at least one C₄ to C₇ multiolefin monomer; providing a thermally activated peroxide curing system; and, mixing the thermoplastic and the non-halogenated elastomer together with the peroxide curing system at a temperature of at least 100 °C in order to form the thermoplastic vulcanizate.

### Brief Description of the Drawings

Having summarized the invention, preferred embodiments thereof will now be described by way of example with reference to the accompanying figures, in which:
Fig. 1 is a prior art illustration of the structure of butyl rubber (IIR); and,
Fig. 2 is a prior art illustration of the structure of halobutyl rubber (HIIR).

### Detailed Description

The invention is not limited to a special isoolefin or isomonoolefin. However, isomonoolefins within the range of from 4 to 16 carbon atoms, in particular 4-7 carbon atoms, such as isobutene, 2-methyl-1-butene, 3-methyl-1-butene, 2-methyl-2-butene, 4-methyl-1-pentene and mixtures thereof are preferred. Most preferred is isobutene.

The invention is not limited to a special multiolefin. Every multiolefin copolymerizable with the isoolefin known by the skilled in the art can be used. However, multiolefins within the range of from 4-14 carbon atoms, such as isoprene, butadiene, 2-methylbutadiene, 2,4-dimethylbutadiene, piperyline, 3-methyl-1,3-pentadiene, 2,4-hexadiene, 2-neopentylbutadiene, 2-methyl-1,5-hexadiene, 2,5-dimethyl-2,4-hexadiene, 2-methyl-1,4-pentadiene, 2-methyl-1,6-heptadiene, cyclopentadiene, methylcyclopentadiene, cyclohexadiene, 1-vinyl-cyclohexadiene and mixtures thereof, in particular conjugated dienes, are preferably used. Isoprene is particularly preferably used.

In the present invention, β-pinene can also be used as a co-monomer for the isoolefin. As optional monomers every monomer copolymerizable with the isoolefins and/or dienes known by the skilled in the art can be used. α-methyl styrene, p-methyl styrene, chlorostyrene, cyclopentadiene and methylcyclopentadiene are preferably used. Indene and other styrene derivatives may also be used in this invention.

The multiolefin content is at least greater than 3.5 mol%, more preferably greater than 4.0 mol%, yet more preferably greater than 4.5 mol%, even more preferably greater than 5.0 mol%, still more preferably greater than 6.0 mol%, yet even more preferably greater than 7.0 mol%, still yet more preferably greater than 7.5 mol%.

The butyl polymer further comprises units derived from one or more multiolefin cross-linking agents. The term cross-linking agent is known to those skilled in the art and is understood to denote a compound that causes chemical cross-linking between the polymer chains in opposition to a monomer that will add to the chain. Some easy preliminary tests will reveal if a compound will act as a monomer or a cross-linking agent. The choice of the cross-linking agent is not particularly restricted. Preferably, the cross-linking comprises a multiolefinic hydrocarbon compound. Examples of these are norbornadiene, 2-isopropenylnorbornene, 2-vinyl-norbornene, 1,3,5-hexatriene, 2-phenyl-1,3-butadiene, divinylbenzene, diisopropenylbenzene, divinyltoluene, divinylxylene and C₁ to C₂₀ alkyl-substituted derivatives thereof. More preferably, the multiolefin crosslinking agent is divinylbenzene, diisopropenylbenzene, divinyltoluene, divinylxylene and C₁ to C₂₀ alkyl substituted derivatives thereof, and or mixtures of the compounds given. Most preferably the multiolefin crosslinking agent comprises divinylbenzene and/or diisopropenylbenzene.

Preferably, the monomer mixture used to prepare the elastomer comprises in the range of from 80% to 95% by weight of at least one isomonoolefin monomer, in the range of from 4.0% to 20% by weight of at least one multiolefin monomer and in the range of from 0.01% to 1% by weight of at least one multiolefin cross-linking agent. More preferably, the monomer mixture comprises in the range of from 83% to 94% by weight of at least one isomonoolefin monomer, in the range of from 5.0% to 17% by weight of a multiolefin monomer and in the range of from 0.01 % to 1 % by weight of at least one multiolefin cross-linking agent. Most preferably, the monomer mixture comprises in the range of from 85% to 93% by weight of at least one isoolefin monomer, in the range of from 6.0% to 15% by weight of at least one multiolefin monomer and in the range of from 0.01% to 1 % by weight of at least one multiolefin cross-linking agent.

The weight average molecular weight, **M_{w},** of the elastomer is preferably greater than 240 kg/mol, more preferably greater than 300 kg/mol, yet more preferably greater than 500 kg/mol, even more preferably greater than 600 kg/mol, still more preferably greater than 700 kg/mol.

Any thermoplastic known to those skilled in the art as being suitable for use in the formation of thermoplastic vulcanizates can be used. The selected thermoplastic or thermoplastics preferably melt at temperatures in the range of 60 to 250 °C. Examples of suitable thermoplastics include polypropylene, polyethylene, polystyrene, acrylonitrile-butadiene-styrene (ABS), allyl resins, ethylene vinyl alcohol, fluoroplastics, polyacetals, polyacrylates, polyacrylonitriles, polyamides, polyimides, polycarbonates, polyesters, polyethylene oxide, polypropylene oxide, polyethylene glycol, polypropylene glycol, polyvinylidene chloride or mixtures thereof.

The elastomer is preferably provided in an amount of from 20 to 80 wt% of the thermoplastic, more preferably from 30 to 70 wt%, yet more preferably from 40 to 60 wt%. The elastomer is mixed with the thermoplastic and preferably uniformly dispersed throughout the thermoplastic in order that the thermoplastic vulcanizate formed upon peroxide curing of the mixture has substantially consistent properties throughout. Any suitable mixing method or equipment may be used that achieves uniform dispersion of the elastomer in the thermoplastic; for example, an internal mixer, a mill, or an extruder may be used. In a preferred method, the thermoplastic and elastomer are provided as pellets or beads and mixed using an extruder that produces conditions sufficient to melt at least the thermoplastic and preferably both the thermoplastic and the elastomer. The thermoplastic and the elastomer may be provided to the extruder either together or sequentially. The temperature of the thermoplastic and elastomer in the extruder during mixing is preferably at least 100 °C, more preferably at least 130 °C, yet more preferably at least 150 °C, even more preferably at least 160 °C, still more preferably at least 170 °C.

Once the thermoplastic and elastomer are well mixed, a peroxide curing system is used to form the thermoplastic vulcanizate. Suitable peroxide curing systems are well known to persons skilled in the art and typically employ a thermally activated peroxide to initiate the vulcanization cross-linking reactions. The invention is not limited to a special peroxide curing system. For example, inorganic or organic peroxides are suitable. Preferred are organic peroxides such as dialkylperoxides, ketalperoxides, aralkylperoxides, peroxide ethers or peroxide esters. Examples of peroxides suitable for use in the peroxide curing system include 2,5-dimethyl-2,5-di-(tert-butylperoxy)hexyne-3, di*-tert-*butyl peroxide, 2,5-dimethyl-2, 5-di(*tert*-butylperoxy)hexane, *tert*-butyl cumyl peroxide, di-(2-*tert*-butylperoxy isopropyl)benzene, dicumyl peroxide, butyl 4,4-di-(*tert-*butylperoxy) valerate, 1,1-di-(*tert*-butylperoxy)-3,3,5-trimethylcyclohexane, *tert*-butyl peroxybenzoate, *tert*-butyl peroxy 3,5,5-trimethylhexanoate, dibenzyl peroxide, di(4-methylbenzoyl) peroxide, di-2,4-dichlorobenzoyl peroxide or mixtures thereof. Usually the amount of peroxide in the compound is in the range of from 1 to 10 phr (phr = per hundred rubber), preferably from 1 to 5 phr. An anti-oxidant may be used in conjunction with the peroxide as part of the peroxide curing system. Curing is usually performed at a temperature in the range of from 100 to 200°C, preferably 130 to 180°C. Peroxides might be applied advantageously in a polymer-bound form. Suitable systems are commercially available, such as Polydispersion® T(VC) D-40 P from Rhein Chemie Rheinau GmbH, D (a polymer bound di-tert.-butylperoxy-isopropylbenzene).

In a preferred embodiment, the peroxide curing system is added to the mixed thermoplastic and elastomer in the extruder. The peroxide curing system is either mixed with the thermoplastic and elastomer prior to initiating vulcanization or concurrently therewith, depending on the temperature employed in the mixing stage of the extruder. If mixed at temperatures below that required to thermally initiate peroxide cross-linking, the temperature is raised to form the thermoplastic vulcanizate.

The thermoplastic vulcanizate may be used to create a variety of shaped articles that are particularly suitable for high-purity applications. The shaped articles may be formed by any suitable method, for example extrusion molding, injection molding, blow molding or the like. The shaped articles may comprise, for example, condenser caps, medical components, such as components of biomedical devices or pharmaceutical devices (eg: stoppers in medicine-containing vials, plungers in syringes, etc.) and/or in fuel cell components, such as seals.

Shaped articles made from the thermoplastic vulcanizates of the present invention exhibit surprisingly good recyclability. Upon recycling, the shaped articles according to the present invention exhibit relatively small loss in tensile strength and ultimate elongation. The thermoplastic vulcanizates of the present invention exhibit a loss in tensile strength and ultimate elongation (as compared with the initial values for those properties) of less than 55% upon three recycling iterations. The recyclability of the TPV's according to the present invention is of significant environmental benefit, particularly in mass market applications such as fuel cells.

The thermoplastic vulcanizates of the present invention may comprise mineral or non-mineral fillers of the type known to persons skilled in the art to be suitable for use with butyl rubber or butyl rubber compounds. The amounts are conventionally from 1 to 50% by weight of the thermoplastic vulcanizate. The fillers may be added to the extruder during mixing of the thermoplastic with the elastomer and/or with the elastomer itself during formation thereof. Examples of suitable fillers include carbon black, talc, silica, titanium dioxide, etc. The thermoplastic vulcanizates of the present invention can also contain further auxiliary products for rubbers, such as reaction accelerators, vulcanizing accelerators, vulcanizing acceleration auxiliaries, antioxidants, foaming agents, anti-aging agents, heat stabilizers, light stabilizers, ozone stabilizers, processing aids, plasticizers, tackifiers, blowing agents, dyestuffs, pigments, waxes, extenders, organic acids, inhibitors, metal oxides, and activators such as triethanolamine, polyethylene glycol, hexanetriol, etc., which are known to the rubber industry.

Further features of the invention will now be described with reference to the following Examples.

### Experimental

### Equipment

Hardness and Stress Strain Properties were determined with the use of an A-2 type durometer following ASTM D-2240 requirements. The stress strain data was generated at 23°C according to the requirements of ASTM D-412 Method A. Die C dumbbells cut from 2mm thick tensile sheets (formed in a press at 15,000 psi for a total of 14 minutes at temperatures at or above the melting point of the thermplastic matrix material) were used. ¹H NMR spectra were recorded with a Bruker DRX500® spectrometer (500.13 MHz ¹H) in CDCl₃ with chemical shifts referenced to tetramethylsilane. The TPVs were prepared with the use of a Farrel standard 150 mm diameter mill and a Brabender Intelli-Torque Plasticorder®.

### Materials

All reagents, unless otherwise specified, were used as received from Sigma-Aldrich (Oakville, Ontario). IIR (RB301)™ was used as supplied by LANXESS Inc. and EPDM (Buna EP G 5450)™ was used as supplied by LANXESS Corp. HVA #2™ (Co-agent) was used as supplied by DuPont Canada Inc, Sunpar 2280™ (Plasticizer) was used as supplied by R.E. Carroll Inc, Irganox 1010™ (Antioxidant) was used as supplied by Ciba Specialty Chemicals Corp, Carbon Black IRB#7™ (Filler) was used as supplied by Balentine Enterprises Inc and Triganox 145-45B-pd™ (Peroxide) was used as supplied by H.M. Royal.

### Example 1, Preparation of Butyl Rubber Containing 7.5 mol % of Isoprene.

The following example illustrates production, via a continuous process, of a novel grade of IIR possessing an isoprene content of up to 8.0 mol % and Mooney viscosity (ML 1+8 @ 125°C) between 35 and 40 MU.

The monomer feed composition was comprised of 4.40 wt. % of isoprene (IP or IC5) and 25.7 wt. % of isobutene (IB or IC4). This mixed feed was introduced into the continuous polymerization reactor at a rate of 5900 kg/hour. In addition, DVB was introduced into the reactor at a rate of 5.4 to 6 kg/hour. Polymerization was initiated via the introduction of an AlCl₃/MeCl solution (0.23 wt. % of AlCl₃ in MeCl) at a rate of 204 to 227 kg/hour. The internal temperature of the continuous reaction was maintained between -95 and -100 °C through the use of an evaporative cooling process. Following sufficient residence within the reactor, the newly formed polymer crumb was separated from the MeCl diluent with the use of an aqueous flash tank. At this point, ca. 1 wt. % of Stearic acid was introduced into the polymer crumb. Prior to drying, 0.1 wt. % of Irganox® 1010 was added to the polymer. Drying of the resulting material was accomplished with the use of a conveyor oven. Table 1 details the characteristics of the final material.

**Table 1**

| | |
|---|---|
| Isoprene Content (mol %) | 7.0 - 8.0 |
| DVB Content (mol %) | 0.07 - 0.11 |
| Mooney Viscosity | 35 - 40 |
| (MU, ML1+8 @ 125 °C) | |
| Gel Content (wt. %) | < 5.0 |
| Mw (kg/mol) | 700 - 900 |
| Mn (kg/mol) | 100 - 105 |
| Mz (kg/mol) | 3200 - 5500 |
| Conversion (%) | 77 - 84 |

### Examples 2-4

The following examples demonstrate the effect of peroxide and co-agent loading on the physical properties of a butyl/isotactic polypropylene (iPP) TPV. TPV Examples 2-4 with the ingredients listed in Table 2 were prepared with the use of a Brabender Plasti-Corder® operating at 180 °C at 150 rpm. The plastic was added first and allowed to melt for three minutes (Stage 1). Example 1 was then added and allowed to mix with the plastic for two minutes (Stage 2). The peroxide and co-agent were then added and allowed to dynamically vulcanize the butyl component for one minute (Stage 3). The anti-oxidant was then added and the mix was dumped after 30 seconds (Stage 4). The compound was then put through a mill to cool and sheet off.

**Table 2**

| **Example** | **2** | **3** | **4** |
|---|---|---|---|
| Example 1 (PHR) | 70 | 70 | 70 |
| iPP (PHR) | 30 | 30 | 30 |
| Co-agent (PHR) | 0.38 | 0.75 | 1.75 |
| Peroxide (PHR) | 1.05 | 2.01 | 4.9 |
| Anti-oxidant (PHR) | 1 | 1 | 1 |
| Hardness Shore A2 (pts.) | 44 | 54 | 64 |
| Ultimate Tensile (MPa) | 1.22 | 1.78 | 2.33 |
| Ultimate Elongation (%) | 82.6 | 82.4 | 70.9 |

As can be seen from the data presented in Table 2, increasing peroxide and co-agent levels results in greater tensile strength and hardness, but also lower ultimate elongation. However, the loss in elongation (- 14%) was not nearly as significant as the gain in tensile strength (+ 91 %).

### Example 4-8

The following examples demonstrate the effect of mixing time on the physical properties of the TPV. The mixing times of each stage as mentioned above are varied for Examples 4-8 as delineated in Table 3.

**Table 3**

| **Example** | **4 (reference)** | **5** | **6** | **7** | **8** |
|---|---|---|---|---|---|
| Stage 1 (min) | 3 | 3 | 3 | 3 | 4 |
| Stage 2 (min) | 2 | 3 | 3 | 2 | 2 |
| Stage 3 (min) | 1 | 2 | 1 | 1 | 1 |
| Stage 4 (min) | 0.5 | 0.5 | 0.5 | 1 | 0.5 |
| Hardness Shore A2 (pts.) | 64 | 63 | 58 | 64 | 62 |
| Ultimate Tensile (MPa) | 2.33 | 1.87 | 1.53 | 2.25 | 2.38 |
| Ultimate Elongation (%) | 70.9 | 52.0 | 42.7 | 64.8 | 91.8 |

The data presented in Table 3 illustrates the interdependency which exists between mixing times (for each of the stages) with the physical properties of the final TPV. The TPV prepared with the longest Stage 1 time (i.e. plastic melting stage) possessed the best balance of properties.

### Examples 9-12

The following examples illustrate the effect of mold temperature on the physical properties of the TPV. TPV Examples 9-12 were prepared with the ingredients listed in Table 4. These examples were prepared by first creating a masterbatch of Example 1, plasticizer, filler and co-agent. The second step was mixing in a Brabender Plasti-Corder® at 180 °C at 150 rpm. The plastic was added and allowed to melt for four minutes. The masterbatch was then added and allowed to mix with the plastic for two minutes. The peroxide was then added and allowed to dynamically vulcanize the IIR for one minute. The anti-oxidant was then added and the mix was dumped after 30 seconds. The compound was then put through a mill to cool and sheet off.

**Table 4**

| **Material** | **PHR** |
|---|---|
| Example 1 | 70 |
| Filler | 20 |
| Plasticizer | 5 |
| Co-agent | 1.75 |
| iPP | 30 |
| Peroxide | 4.9 |
| Anti-oxidant | 5 |

The TPVs were molded in a PRECO™ press for 14 minutes at 15,000 psi and then cooled in a PHI™ press for 20 minutes. The molding temperatures of Examples 9-12 were varied as seen in Table 5.

**Table 5**

| **Example** | **9** | **10** | **11** | **12** |
|---|---|---|---|---|
| Mold Temperature (°C) | 180 | 190 | 200 | 210 |
| Hardness Shore A2 (pts.) | 76 | 76 | 78 | 75 |
| Ultimate Tensile (MPa) | 3.82 | 4.14 | 4.46 | 4.18 |
| Ultimate Elongation (%) | 59.2 | 84.7 | 91.5 | 73.1 |

Table 5 shows that the tensile strength and elongation go through a maximum at 200°C and are significantly reduced at higher and lower temperatures. This data illustrates the importance of the molding temperature in acquiring the optimum physical properties of a TPV.

### Examples 13-15

The following illustrate the physical property benefits associated with the use of high IP IIR (Example 1) in place of a regular grade of IIR (RB301)™. As an additional comparative example, a TPV based on EPDM rubber (Buna EP G 5450™, Example 13) was prepared using the same mixing sequence employed for Examples 14-15 (see Table 6). All three examples were molded in a steam press for 14 minutes at 25,000 psi and then placed in a cold press at 10,000 psi for 20 minutes.

**Table 6**

| **Example** | **13** | **14** | **15** |
|---|---|---|---|
| Example 1 (PHR) | | | 70 |
| RB 301 (PHR) | | 70 | |
| EPDM (PHR) | 70 | | |
| Filler (PHR) | 20 | 20 | 20 |
| Plasticizer (PHR) | 5 | 5 | 5 |
| Co-agent (PHR) | 1.75 | 1.75 | 1.75 |
| iPP (PHR) | 30 | 30 | 30 |
| Peroxide (PHR) | 4.9 | 4.9 | 4.9 |
| Anti-oxidant (PHR) | 5 | 5 | 5 |
| | | | |
| Hardness Shore A2 (pts.) | 80 | No Data | 77 |
| Ultimate Tensile (MPa) | 3.87 | No Data | 4.83 |
| Ultimate Elongation (%) | 40.0 | No Data | 124 |

Table 6 shows that the high IP IIR-based TPV had much better tensile strength and ultimate elongation than the EPDM-based TPV. Given the fact that regular grades of butyl rubber are known to degrade under the action of peroxides, a TPV based on RB 301™ (Example 14) could not be obtained.

### Examples 15-18

The following examples display the recyclability of high IP IIR based TPV's. Example 15 (as described above) was cut into strips and re-molded under the same conditions to produce Example 16 (first recycle). Example 16 was then cut into strips and re-molded to produce Example 17 (second recycle). Example 17 was then cut into strips and re-molded to produce Example 18 (third recycle). Table 7 lists the stress/strain properties of Examples 15-18.

**Table 7**

| **Example** | **15** | **16** | **17** | **18** |
|---|---|---|---|---|
| Recycle # | | 1 | 2 | 3 |
| Hardness Shore A2 (pts.) | 77 | 75 | 74 | 71 |
| Ultimate Tensile (MPa) | 4.83 | 3.61 | 2.29 | 2.74 |
| Ultimate Elongation (%) | 124 | 85.3 | 92.2 | 61.0 |

Table 7 shows that the tensile strength of the TPV was reduced by 25% and the ultimate elongation was reduced by 31 % after the first recycle. The initial tensile strength was then reduced by 53% and by 26% of its initial ultimate elongation after the second recycle. The initial tensile strength was finally reduced by 43% and by 51 % of its initial ultimate elongation after the third recycle.

The use of a novel grade of peroxide curable, high isoprene butyl rubber (Example 1) allows one to prepare peroxide cured IIR/iPP TPV's. The use of a peroxide cure system results in a number of advantages when compared to cure systems known for traditional grades of IIR or HIIR. As a result of the stronger C-C crosslinks (versus C-S or S-S crosslinks) generated in a peroxide cure, one would expect the inventive TPV's to possess enhanced levels of thermal stability when compared to sulfur cured analogs.

Since the TPV's described above are based on an unhalogenated grade of butyl rubber, the final articles would not contain any organic or inorganic halide or sulfide vulcanization bi-products. Furthermore, by avoiding the use of a phenolic resin cure system, increasing levels of hygroscopicity and article discoloration will also be avoided. Given these advantages, the TPV's described here would be valuable in a number of pharmaceutical and consumer goods applications.

The foregoing describes preferred embodiments of the invention and other features and embodiments of the invention will be evident to persons skilled in the art. The following claims are to be construed broadly with reference to the foregoing and are intended by the inventor to include other variations and sub-combinations that are not explicitly claimed.

## Claims

1. A peroxide cured thermoplastic vulcanizate comprising:
a) a thermoplastic; and,
b) a non-halogenated elastomer comprising repeating units derived from at least one C₄ to C₇ isomonoolefin monomer and at least 3.5 mol% of repeating units derived from at least one C₄ to C₇ multiolefin monomer.

2. The thermoplastic vulcanizate of claim 1, wherein the isomonoolefin comprises isobutene and the multiolefin comprises isoprene.

3. The thermoplastic vulcanizate of claims 1 or 2, wherein the thermoplastic comprises polypropylene, polyethylene, polystyrene, acrylonitrile-butadiene-styrene (ABS), allyl resins, ethylene vinyl alcohol, fluoroplastics, polyacetals, polyacrylates, polyacrylonitriles, polyamides, polyimides, polycarbonates, polyesters, polyethylene oxide, polypropylene oxide, polyethylene glycol, polypropylene glycol, polyvinylidene chloride or mixtures thereof.

4. The thermoplastic vulcanizate of any one of claims 1 to 3, wherein the non-halogenated elastomer comprises at least 5 mol% of repeating units derived from at least one C₄ to C₇ multiolefin monomer.

5. The thermoplastic vulcanizate of any one of claims 1 to 4, wherein the non-halogenated elastomer comprises at least 7.5 mol% of repeating units derived from at least one C₄ to C₇ multiolefin monomer.

6. The thermoplastic vulcanizate of any one of claims 1 to 5, wherein the non-halogenated elastomer is present in an amount of from 20 to 80 wt% of the thermoplastic vulcanizate.

7. A shaped article made from the thermoplastic vulcanizate of any one of claims 1 to 6.

8. The shaped article of claim 7, comprising a condenser cap, syringe component or fuel cell component.

9. The shaped article of claims 7 or 8, wherein the article is recyclable at least three times with a loss in initial tensile strength of less than 55% and a loss in initial ultimate elongation of less than 55%.

10. A thermoplastic vulcanizate prepared by:
a) providing a thermoplastic;
b) providing a non-halogenated elastomer comprising repeating units derived from at least one C₄ to C₇ isomonoolefin monomer and at least 3.5 mol% of repeating units derived from at least one C₄ to C₇ multiolefin monomer;
c) providing a thermally activated peroxide curing system; and,
d) mixing the thermoplastic and the non-halogenated elastomer together with the peroxide curing system at a temperature of at least 100 °C in order to form the thermoplastic vulcanizate.

11. The thermoplastic vulcanizate of claim 10, wherein the isomonoolefin comprises isobutene and the multiolefin comprises isoprene.

12. The thermoplastic vulcanizate of claims 10 or 11, wherein the thermoplastic comprises polypropylene, polyethylene, polystyrene, acrylonitrile-butadiene-styrene (ABS), allyl resins, ethylene vinyl alcohol, fluoroplastics, polyacetals, polyacrylates, polyacrylonitriles, polyamides, polyimides, polycarbonates, polyesters, polyethylene oxide, polypropylene oxide, polyethylene glycol, polypropylene glycol, polyvinylidene chloride or mixtures thereof.

13. The thermoplastic vulcanizate of any one of claims 10 to 12, wherein the non-halogenated elastomer comprises at least 5 mol% of repeating units derived from at least one C₄ to C₇ multiolefin monomer.

14. The thermoplastic vulcanizate of any one of claims 10 to 13, wherein the non-halogenated elastomer comprises at least 7.5 mol% of repeating units derived from at least one C₄ to C₇ multiolefin monomer.

15. The thermoplastic vulcanizate of any one of claims 10 to 14, wherein the non-halogenated elastomer is present in an amount of from 20 to 80 wt% of the thermoplastic vulcanizate.

16. The thermoplastic vulcanizate of any one of claims 10 to 15, wherein the peroxide curing system comprises 2,5-dimethyl-2,5-di-(*tert*-butylperoxy)hexyne-3, di-*tert*-butyl peroxide, 2,5-dimethyl-2, 5-di(*tert*-butylperoxy)hexane, *tert*-butyl cumyl peroxide, di-(2-*tert*-butylperoxy isopropyl)benzene, dicumyl peroxide, butyl 4,4-di-(*tert* butylperoxy) valerate, 1,1-di-(*tert*-butylperoxy)-3,3,5-trimethylcyclohexane, *tert*-butyl peroxybenzoate, *tert*-butyl peroxy 3,5,5-trimethylhexanoate, dibenzyl peroxide, di(4-methylbenzoyl) peroxide, di-2,4-dichlorobenzoyl peroxide or mixtures thereof.

17. The thermoplastic vulcanizate of any one of claims 10 16, wherein the mixing is performed in an extruder under conditions that cause melting of the thermoplastic.

18. The thermoplastic vulcanizate of claim 17, wherein the mixing is performed in the extruder under conditions that cause melting of the elastomer and wherein the elastomer is dispersed in the thermoplastic.

19. The thermoplastic vulcanizate of claims 17 or 18, wherein the peroxide curing system is added to the melted thermoplastic and elastomer in the extruder.

20. The thermoplastic vulcanizate of claim 19, wherein the temperature of the melted thermoplastic and elastomer in the extruder after addition of the peroxide curing system is at least 130 °C.

## Patentansprüche

1. Peroxidgehärtetes thermoplastisches Vulkanisat, umfassend:
a) einen Thermoplast und
b) ein nichthalogeniertes Elastomer, das Wiederholungseinheiten, die sich von mindestens einem C₄- bis C₇-Isomonoolefinmonomer ableiten, und mindestens 3,5 Mol-% Wiederholungseinheiten, die sich von mindestens einem C₄- bis C₇-Multiolefinmonomer ableiten, umfasst.

2. Thermoplastisches Vulkanisat nach Anspruch 1, wobei das Isomonoolefin Isobuten umfasst und das Multiolefin Isopren umfasst.

3. Thermoplastisches Vulkanisat nach Anspruch 1 oder 2, wobei der Thermoplast Polypropylen, Polyethylen, Polystyrol, Acrylnitril-Butadien-Styrol (ABS), Allylharze, Ethylen-Vinylalkohol, Fluoroplaste, Polyacetale, Polyacrylate, Polyacrylnitrile, Polyamide, Polyimide, Polycarbonate, Polyester, Polyethylenoxid, Polypropylenoxid, Polyethylenglykol, Polypropylenglykol, Polyvinylidenchlorid oder Mischungen davon umfasst.

4. Thermoplastisches Vulkanisat nach einem der Ansprüche 1 bis 3, wobei das nichthalogenierte Elastomer mindestens 5 Mol-% Wiederholungseinheiten, die sich von mindestens einem C₄- bis C₇-Multiolefinmonomer ableiten, umfasst.

5. Thermoplastisches Vulkanisat nach einem der Ansprüche 1 bis 4, wobei das nichthalogenierte Elastomer mindestens 7,5 Mol-% Wiederholungseinheiten, die sich von mindestens einem C₄- bis C₇-Multiolefinmonomer ableiten, umfasst.

6. Thermoplastisches Vulkanisat nach einem der Ansprüche 1 bis 5, wobei das nichthalogenierte Elastomer in einer Menge von 20 bis 80 Gew.-%, bezogen auf das thermoplastische Vulkanisat, vorliegt.

7. Formkörper aus dem thermoplastischen Vulkanisat nach einem der Ansprüche 1 bis 6.

8. Formkörper nach Anspruch 7, umfassend einen Kondensatordeckel, eine Spritzenkomponente oder eine Brennstoffzellenkomponente.

9. Formkörper nach Anspruch 7 oder 8, wobei der Formkörper mit einem Verlust von Anfangszugfestigkeit von weniger als 55% und einem Verlust von Anfangsreißdehnung von weniger als 55% mindestens dreimal rezyklierbar ist.

10. Thermoplastisches Vulkanisat, hergestellt durch:
a) Bereitstellen eines Thermoplasts;
b) Bereitstellen eines nichthalogenierten Elastomers, das Wiederholungseinheiten, die sich von mindestens einem C₄- bis C₇-Isomonoolefinmonomer ableiten, und mindestens 3,5 Mol-% Wiederholungseinheiten, die sich von mindestens einem C₄- bis C₇-Multiolefinmonomer ableiten, umfasst;
c) Bereitstellen eines thermisch aktivierten Peroxidhärtungssystems und
d) Zusammenmischen des Thermoplasts und des nichthalogenierten Elastomers mit dem Peroxidhärtungssystem bei einer Temperatur von mindestens 100°C zur Bildung des thermoplastischen Vulkanisats.

11. Thermoplastisches Vulkanisat nach Anspruch 10, wobei das Isomonoolefin Isobuten umfasst und das Multiolefin Isopren umfasst.

12. Thermoplastisches Vulkanisat nach Anspruch 10 oder 11, wobei der Thermoplast Polypropylen, Polyethylen, Polystyrol, Acrylnitril-Butadien-Styrol (ABS), Allylharze, Ethylen-Vinylalkohol, Fluoroplaste, Polyacetale, Polyacrylate, Polyacrylnitrile, Polyamide, Polyimide, Polycarbonate, Polyester, Polyethylenoxid, Polypropylenoxid, Polyethylenglykol, Polypropylenglykol, Polyvinylidenchlorid oder Mischungen davon umfasst.

13. Thermoplastisches Vulkanisat nach einem der Ansprüche 10 bis 12, wobei das nichthalogenierte Elastomer mindestens 5 Mol-% Wiederholungseinheiten, die sich von mindestens einem C₄- bis C₇-Multiolefinmonomer ableiten, umfasst.

14. Thermoplastisches Vulkanisat nach einem der Ansprüche 10 bis 13, wobei das nichthalogenierte Elastomer mindestens 7,5 Mol-% Wiederholungseinheiten, die sich von mindestens einem C₄- bis C₇-Multiolefinmonomer ableiten, umfasst.

15. Thermoplastisches Vulkanisat nach einem der Ansprüche 10 bis 14, wobei das nichthalogenierte Elastomer in einer Menge von 20 bis 80 Gew.-%, bezogen auf das thermoplastische Vulkanisat, vorliegt.

16. Thermoplastisches Vulkanisat nach einem der Ansprüche 10 bis 15, wobei das Peroxidhärtungssystem 2,5-Dimethyl-2,5-di(tert.-butylperoxy)-hexin-3, Di-tert.-butylperoxid, 2,5-Dimethyl-2,5-di(tert.-butylperoxy)hexan, tert.-Butylcumylperoxid, Di(2-tert.-butylperoxyisopropyl)benzol, Dicumylperoxid, 4,4-Di(tert.-butylperoxy)valeriansäurebutylester, 1,1-Di(tert.-butylperoxy)-3,3,5,-trimethylcyclohexan, Peroxybenzoesäure-tert.-butylester, Peroxy-3,5,5-trimethylhexansäure-tert.-butylester, Dibenzylperoxid, Di(4-methyl-benzoyl)peroxid, Di-2,4-dichlorbenzoylperoxid oder Mischungen davon umfasst.

17. Thermoplastisches Vulkanisat nach einem der Ansprüche 10 bis 16, wobei das Mischen in einem Extruder unter Bedingungen, die den Thermoplast zum Schmelzen bringen, durchgeführt wird.

18. Thermoplastisches Vulkanisat nach Anspruch 17, wobei das Mischen in einem Extruder unter Bedingungen, die das Elastomer zum Schmelzen bringen, durchgeführt wird und das Elastomer in dem Thermoplast dispergiert wird.

19. Thermoplastisches Vulkanisat nach Anspruch 17 oder 18, wobei das Peroxidhärtungssystem zu dem geschmolzenen Thermoplast und Elastomer im Extruder gegeben wird.

20. Thermoplastisches Vulkanisat nach Anspruch 19, wobei die Temperatur des geschmolzenen Thermoplasts und Elastomers in dem Extruder nach der Zugabe des Peroxidhärtungssystems mindestens 130°C beträgt.

## Revendications

1. Vulcanisat thermoplastique durci par peroxyde, comprenant :
a)un thermoplastique ; et
b)un élastomère non halogéné comprenant des unités de répétition dérivées d'au moins un monomère isomonooléfinique C₄-C₇ et au moins 3,5 %mol d'unités de répétition dérivées d'au moins un monomère multioléfinique C₄-C₇.

2. Vulcanisat thermoplastique selon la revendication 1, dans lequel l'isomonooléfine comprend l'isobutène et la multioléfine comprend l'isoprène.

3. Vulcanisat thermoplastique selon les revendications 1 ou 2, dans lequel le thermoplastique comprend le polypropylène, le polyéthylène, le polystyrène, l'acrylonitrile-butadiène-styrène (ABS), les résines allyliques, l'éthylène-alcool vinylique, les fluoroplastiques, les polyacétals, les polyacrylates, les polyacrylonitriles, les polyamides, les polyimides, les polycarbonates, les polyesters, l'oxyde de polyéthylène, l'oxyde de polypropylène, le polyéthylène glycol, le polypropylène glycol, le chlorure de polyvinylidène, ou des mélanges de ceux-ci.

4. Vulcanisat thermoplastique selon l'une quelconque des revendications 1 à 3, dans lequel l'élastomère non halogéné comprend au moins 5 %mol d'unités de répétition dérivées d'au moins un monomère multioléfinique C₄-C₇.

5. Vulcanisat thermoplastique selon l'une quelconque des revendications 1 à 4, dans lequel l'élastomère non halogéné comprend au moins 7,5 %mol d'unités de répétition dérivées d'au moins un monomère multioléfinique C₄-C₇.

6. Vulcanisat thermoplastique selon l'une quelconque des revendications 1 à 5, dans lequel l'élastomère non halogéné est présent dans une quantité de 20 % à 80 % en poids du vulcanisat thermoplastique.

7. Article formé constitué du vulcanisat thermoplastique selon l'une quelconque des revendications 1 à 6.

8. Article formé selon la revendication 7, comprenant un bouchon de condensateur, un élément constitutif de seringue ou un élément constitutif de pile à combustible.

9. Article formé selon les revendications 7 ou 8, l'article étant recyclable au moins trois fois avec une perte de la résistance à la traction initiale inférieure à 55 % et une perte de l'allongement à la rupture initial inférieure à 55 %.

10. Vulcanisat thermoplastique préparé en :
a)fournissant un thermoplastique ;
b)fournissant un élastomère non halogéné comprenant des unités de répétition dérivées d'au moins un monomère isomonooléfinique C₄-C₇ et au moins 3,5 %mol d'unités de répétition dérivées d'au moins un monomère multioléfinique C₄-C₇ ;
c)fournissant un système de durcissement peroxyde thermiquement activé ; et
d)mélangeant le thermoplastique et l'élastomère non halogéné avec le système de durcissement peroxyde à une température d'au moins 100 °C afin de former le vulcanisat thermoplastique.

11. Vulcanisat thermoplastique selon la revendication 10, dans lequel l'isomonooléfine comprend l'isobutène et la multioléfine comprend l'isoprène.

12. Vulcanisat thermoplastique selon les revendications 10 ou 11, dans lequel le thermoplastique comprend le polypropylène, le polyéthylène, le polystyrène, l'acrylonitrile-butadiène-styrène (ABS), les résines allyliques, l'éthylène-alcool vinylique, les fluoroplastiques, les polyacétals, les polyacrylates, les polyacrylonitriles, les polyamides, les polyimides, les polycarbonates, les polyesters, l'oxyde de polyéthylène, l'oxyde de polypropylène, le polyéthylène glycol, le polypropylène glycol, le chlorure de polyvinylidène, ou des mélanges de ceux-ci.

13. Vulcanisat thermoplastique selon l'une quelconque des revendications 10 à 12, dans lequel l'élastomère non halogéné comprend au moins 5 %mol d'unités de répétition dérivées d'au moins un monomère multioléfinique C₄-C₇.

14. Vulcanisat thermoplastique selon l'une quelconque des revendications 10 à 13, dans lequel l'élastomère non halogéné comprend au moins 7,5 %mol d'unités de répétition dérivées d'au moins un monomère multioléfinique C₄-C₇.

15. Vulcanisat thermoplastique selon l'une quelconque des revendications 10 à 14, dans lequel l'élastomère non halogéné est présent dans une quantité de 20 % à 80 % en poids du vulcanisat thermoplastique.

16. Vulcanisat thermoplastique selon l'une quelconque des revendications 10 à 15, dans lequel le système de durcissement peroxyde comprend le 2,5-diméthyl-2,5-di-(*tert*-butylperoxy)hexyne-3, le peroxyde de di-*tert*-butyle, le 2,5-diméthyl-2,5-di-(*tert-*butylperoxy)hexane, le peroxyde de *tert-*butylcumyle, le di-(2-*tert-*butylperoxyisopropyl)benzène, le peroxyde de dicumyle, le 4,4-di-(tert-butylperoxy)valérate de butyle, le 1,1-di-(*tert*-butylperoxy)-3,3,5-triméthylcyclohexane, le peroxybenzoate de *tert-*butyle, le peroxy-3,5,5-triméthylhexanoate de *tert*-butyle, le peroxyde de dibenzyle, le peroxyde de di(4-méthylbenzoyle), le peroxyde de di-2,4-dichlorobenzoyle, ou des mélanges de ceux-ci.

17. Vulcanisat thermoplastique selon l'une quelconque des revendications 10 à 16, dans lequel le mélange est réalisé dans une extrudeuse sous des conditions entraînant une fusion du thermoplastique.

18. Vulcanisat thermoplastique selon la revendication 17, dans lequel le mélange est réalisé dans l'extrudeuse sous des conditions entraînant une fusion de l'élastomère et dans lequel l'élastomère est dispersé dans le thermoplastique.

19. Vulcanisat thermoplastique selon les revendications 17 ou 18, dans lequel le système de durcissement peroxyde est ajouté au thermoplastique et à l'élastomère en fusion dans l'extrudeuse.

20. Vulcanisat thermoplastique selon la revendication 19, dans lequel la température du thermoplastique et de l'élastomère en fusion dans l'extrudeuse, après l'addition du système de durcissement peroxyde, est d'au moins 130 °C.
